# EUROPEAN PATENT SPECIFICATION

(11) **EP 3 809 650 B1**
(45) Date of publication and mention of the grant of the patent: **02.10.2024**
(21) Application number: 18923668.0
(22) Date of filing: 18.06.2018
(51) Int. Cl.: H04L 27/26, H04L 5/00, H04W 72/00, H04B 7/06

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 21.04.2021
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/023166
(87) International publication number: WO 2019/244222

(56) References cited:
- ERICSSON: "On beam indication, measurement, and reporting", vol. RAN WG1, no. Prague, Czech Republic; 20171009 - 20171013, 8 October 2017 (2017-10-08), XP051341615, Retrieved from the Internet <URL:http://www.3gpp.org/ftp/Meetings_3GPP_SYNC/RAN1/Docs/> [retrieved on 20171008]
- "RAN1 NR-Adhoc#3 (September 2017)", vol. RAN WG1, no. ; 20170901, 12 December 2017 (2017-12-12), XP051670157, Retrieved from the Internet <URL:http://www.3gpp.org/ftp/tsg%5Fran/TSG%5FRAN/TSGR%5F78/Docs/RP%2D172461%2Ezip> [retrieved on 20171212]
- NOKIA ET AL: "Remaining details on QCL", vol. RAN WG1, no. Prague, Czech Republic; 20171009 - 20171013, 9 October 2017 (2017-10-09), XP051353281, Retrieved from the Internet <URL:http://www.3gpp.org/ftp/tsg_ran/WG1_RL1/TSGR1_90b/Docs/> [retrieved on 20171009]
- VIVO: "Discussion on beam measurement, beam reporting and beam indication", vol. RAN WG1, no. Prague, CZ; 20171009 - 20171013, 8 October 2017 (2017-10-08), XP051340660, Retrieved from the Internet <URL:http://www.3gpp.org/ftp/Meetings_3GPP_SYNC/RAN1/Docs/> [retrieved on 20171008]
- SAMSUNG: "Details on configuration of presence of TCI in DCI", 3GPP TSG RAN WG1 MEETING 91 R1-1720308, vol. RAN WG1, 17 November 2017 (2017-11-17) - 1 December 2017 (2017-12-01), XP051368956
- ERICSSON ET AL.: "WF on DCI Field Size for TCI", 3GPP TSG RAN WG1 MEETING #90B RI-1719190, vol. RAN WG1, 13 October 2017 (2017-10-13), XP051353685
- ZTE ET AL.: "Updates on QCL parameters in TCI", 3GPP TSG RAN WG1 MEETING #92 R1-1803407, vol. RAN WG1, 2 March 2018 (2018-03-02) - 7 March 2018 (2018-03-07), XP051412730
- NTT DOCOMO: "TCI state for PDCCH", 3GPP TSG RAN WG1 MEETING #93 R1-1807839, vol. RAN WG1, 25 May 2018 (2018-05-25), pages 1 - 2, XP051463441

## Description

### Technical Field

The present disclosure relates to a user terminal and a radio communication method in next-generation mobile communication systems.

### Background Art

In the universal mobile telecommunications system (UMTS) network, the specifications of long-term evolution (LTE) have been drafted for the purpose of further increasing high speed data rates, providing lower delays and so on (see Non Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE (for example, Future Radio Access (FRA), 5th generation mobile communication system (5G), 5G+ (plus), New Radio (NR), New radio access (NX), Future generation radio access (FX), LTE Rel. 14 or 15 or later versions) are also under study.

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

ERICSSON: "On beam indication, measurement, and reporting", 3GPP DRAFT; Rl-1718433 relates to beam indication, measurement, and reporting, and more specifically address some of the FFS items so as to build on the established Transmission Configuration Indictor (TCI) framework and L1-RSRP measurement and reporting on SS blocks.

"RANI NR-Adhoc#3 (September 2017)" relates to a NR standard meeting and reports agreements and conclusions regarding Initial access and mobility.

NOKIA ET AL: "Remaining details on QCL", 3GPP DRAFT; R1-1718769 relates to QCL assumptions and configurations in RRC connected state.

VIVO: "Discussion on beam measurement, beam reporting and beam indication", 3GPP DRAFT; R1-1717472 relates to beam reporting and beam indication, including proposals regarding L1-RSRP.

### Summary of Invention

### Technical Problem

In high frequency ranges such as millimeter wave bands, blocking of radio waves is considered to be a serious problem. In future radio communication systems (hereinafter also simply referred to as NR), the transmission of a signal using a plurality of transmission/reception points (TRPs) (multi-TRP) is expected as a solution to this problem.

Further, in NR, it is considered that user terminal (User Equipment (UE)) monitors a downlink control channel (e.g., physical downlink control channel (PDCCH)) on the basis of a configured control resource set (CORESET) and search space.

However, if the PDCCH-related control method that has been considered so far are used, in the case where it is intended to support multi-TRP, problems such as delay or load on UE occurs, which causes communication throughput to be likely to decrease.

Thus, the present disclosure is intended to provide user terminal and radio communication method, as one of objects, which are capable of monitoring appropriately PDCCH even in the case of using multi-TRP.

### Solution to Problem

The object of the invention is achieved by the subject-matter of the independent claims. Advantageous embodiments are defined in the dependent claims. Further examples are provided for facilitating the understanding of the invention.

### Advantageous Effects of Invention

According to an embodiment of the present disclosure, it is possible to monitor appropriately PDCCH even in the case of using multi-TRP.

### Brief Description of Drawings

Fig. 1 is a diagram illustrating an example of communication using multi-TRP.
Fig. 2 is a diagram illustrating an example of a TRP selection sequence in a case where a network recognizes an optimal TRP for UE.
Fig. 3 is a diagram illustrating an example of a TRP selection sequence in a case where a network does not recognize an optimal TRP for UE.
Fig. 4 is a diagram illustrating an example of CORESET configured in the example of Fig. 3.
Fig. 5 is a diagram illustrating an example of mapping a resource to a PDCCH candidate in the second embodiment.
Figs. 6A and 6B are diagrams illustrating an example of a search space set configuration in the second embodiment and a PDCCH candidate specified on the basis of the configuration.
Figs. 7A to 7C are diagrams illustrating another example of mapping a resource to a PDCCH candidate in the second embodiment.
Fig. 8 is a diagram illustrating an example of mapping a resource to a PDCCH candidate in the third embodiment.
Fig. 9 is a diagram illustrating an example of a schematic configuration of a radio communication system according to an embodiment.
Fig. 10 is a diagram illustrating an example of an overall configuration of a radio base station according to an embodiment.
Fig. 11 is a diagram illustrating an example of a functional configuration of a radio base station according to an embodiment.
Fig. 12 is a diagram illustrating an example of an overall configuration of user terminal according to an embodiment.
Fig. 13 is a diagram illustrating an example of a functional configuration of user terminal according to an embodiment.
Fig. 14 is a diagram illustrating an example of a hardware configuration of a radio base station and user terminal according to an embodiment.

### Description of Embodiments

### (CORESET)

In NR, in order to transmit a physical layer control signal (e.g., downlink control information (DCI)) from a base station to user terminal (User Equipment (UE)), a control resource set (CORESET) is used.

The CORESET is an allocation candidate region for a control channel (e.g., physical downlink control channel (PDCCH)). CORESET may be configured to include given frequency domain resources and time domain resources (for example, 1 or 2 OFDM symbols, and the like).

UE may receive CORESET configuration information (also referred to as CORESET configuration or coreset-Config) from the base station. UE can detect the physical layer control signal if UE monitors CORESET configured to its terminal.

The CORESET configuration may be notified by using higher layer signaling, and may be represented by a given RRC information element (may also referred to as "ControlResourceSet"), for example.

Here, the higher layer signaling may be, for example, any of radio resource control (RRC) signaling, Medium Access Control (MAC) signaling, broadcast information and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

A given number (e.g., three or less) of CORESETs can be configured for each bandwidth part (BWP) configured in the UE in the serving cell.

Here, the BWP is a partial frequency band configured in a carrier (also referred to as a cell, a serving cell, a component carrier (CC), and so on), which is also called a partial frequency band or the like. The BWP may include a BWP (UL BWP, uplink BWP) for an uplink (UL) and a BWP (DL BWP, downlink BWP) for a downlink (DL). Each BWP to which the above-mentioned given number of CORESETs is given can be a DL BWP.

The configuration of CORESET can mainly include information regarding PDCCH resource-related configuration and RS-related configuration. The parameters mentioned below can be given to the UE via higher layer signaling (CORESET configuration) for CORESET #p (e.g., 0 ≤ p < 3) configured in each DL BWP. In other words, the parameters mentioned below can be notified (configured) to the UE for each CORESET:
- CORESET identifier (ID)
- Scramble ID of demodulation reference signal (DMRS) for PDCCH
- Time duration of CORESET indicated by the number of consecutive symbols (e.g., time duration or CORESET-time-duration)
- Frequency domain resource allocation (e.g., information indicating a given number of resource blocks that constitutes CORESET (CORESET-freq-dom))
- Mapping type (information indicating interleave or non-interleave) from the control channel element (CCE) in CORESET to the resource element group (REG) (e.g., CORESET-CCE-to-REG-mapping-type)
- Information indicating the size (the number of REGs in the REG bundle) of the group (REG bundle) including a given number of REGs (e.g., CORESET-REG-bundle-size),
- Information indicating the cyclic shift (CS) (CS amount or CS index) for the interleaver of the REG bundle (e.g., CORESET-shift-index)
- Transmission configuration indication (TCI) state for PDCCH (also referred to as DMRS antenna port QCL information (antenna port QCL) for PDCCH reception, etc.)
- Indication of presence or absence of the TCI field in DCI (e.g., DCI format 1_0 or DCI format 1_1) transmitted by PDCCH in CORESET #p (e.g., TCI-PresentInDCI)

Moreover, "CORESET-ID #0" can indicate CORESET (also referred to as initial CORESET, default CORESET, etc.) configured using MIB.

### (Search Space)

The search area and search method for a PDCCH candidate are defined as a search space (SS). The UE can receive search space configuration information (also referred to as search space configuration) from a base station. The search space configuration can be notified via, in one example, higher layer signaling (such as RRC signaling).

The search space configuration can be notified, in one example, to the UE via higher layer signaling (RRC signaling or the like), or can be represented by the given RRC information element (also referred to as "SearchSpace") .

The search space configuration mainly includes information regarding PDCCH monitoring-related configuration and decoding-related configuration, and can include, in one example, information regarding at least one of the following:
- Search space identifier (search space ID)
- CORESET identifier (CORESET-ID) to which the search space configuration is related
- Information indicating whether it is a common search space (C-SS) or a UE-specific search space (UE-SS)
- Number of PDCCH candidates for each aggregation level (AL)
- Monitoring periodicity
- Monitoring offset
- Monitoring pattern in slot (e.g., 14-bit bitmap)

The UE monitors CORESET on the basis of search space configuration. The UE is capable of determining the association between CORESET and search space on the basis of CORESET-ID included in the search space configuration. One CORESET can be associated with one or more search spaces.

Moreover, the terms "monitoring of CORESET", "monitoring of search space (PDCCH candidate) associated with CORESET", "monitoring of downlink control channel (e.g., PDCCH)", and "monitoring of downlink control information (DCI)" are herein used interchangeably with each other. In addition, the term "monitoring" is used interchangeably with "at least one of blind decoding and blind detection".

### (QCL/TCI)

In NR, it is considered that the UE controls receiving processes (e.g., at least one of demapping, demodulation, or decoding) on a channel (e.g., PDCCH or PDSCH) on the basis of quasi-co-location (QCL) related information (QCL information) of the channel.

The QCL is herein an index showing the statistical properties of the channel. In one example, in the case where a signal and another signal have QCL relationship, which means that at least one of Doppler shift, Doppler spread, average delay, delay spread, and spatial parameter (e.g., spatial reception parameter or spatial Rx parameter) is assumable to be the same between these different signals (QCL for at least one of these) of them.

Moreover, the spatial reception parameter can correspond to the reception beam of the UE (e.g., reception analog beam), and the beam can be specified on the basis of the spatial QCL. The QCL and at least one element of the QCL are herein used interchangeably with sQCL (spatial QCL).

The QCL can be specified as a plurality of types (QCL types). In one example, four QCL types A to D of different parameters (or parameter sets) that are assumable to be identical can be provided, which parameters are shown below:
- QCL type A: Doppler shift, Doppler spread, average delay, and delay spread
- QCL type B: Doppler shift and Doppler spread
- QCL type C: average delay and Doppler shift
- QCL type D: spatial reception parameter

The transmission configuration indication (TCI) (or transmission configuration indicator) state (TCI state) can indicate (can include) QCL information.

The TCI state (and/or QCL information) can be, in one example, information relating to QCL between a target channel (or reference signal (RS) for the channel) and another signal (e.g., another downlink reference signal (DL-RS)). In addition, the TCI state can include, in one example, at least one of information relating to DL-RS having QCL relationship (DL-RS related information) and information that indicates the type of the above-mentioned QCL (QCL type information).

The DL-RS related information can include at least one of information indicating DL-RS with QCL relationship and information indicating a resource of DL-RS. In one example, in the case where a plurality of reference signal sets (RS sets) is configured in the UE, the DL-RS related information can indicate at least one of DL-RS having QCL relationship with a channel (or a port for the channel) among RSs included in the RS set, a resource for the DL-RS, or the like.

Here, at least one of RS and DL-RS for a channel can be at least one of a synchronaization signal (SS), a physical broadcast channel (PBCH), a synchronization signal block (SSB), a mobility reference signal (MRS), a channel state information reference signal (CSI-RS), a demodulation reference signal (DMRS), a beam-specific signal, or the like. In addition, at least one of RS and DL-RS for a channel can be a signal constituted by expanding or changing such signal (e.g., a signal constituted by changing at least one of density and period).

The synchronization signal can be, in one example, at least one of a primary synchronaization signal (PSS) and a secondary synchronaization signal (SSS). The SSB can be a signal block including a synchronization signal and a broadcast channel, and can be called an SS/PBCH block or the like.

The information relating to PDCCH (or DMRS antenna port associated with PDCCH) and QCL with a given DL-RS can be referred to as the TCI state or the like for PDCCH. The information relating to PDSCH (or DMRS antenna port associated with PDSCH) and QCL with given DL-RS can be referred to as the TCI state or the like for PDSCH.

The UE can assume the same sQCL as PBCH for a Type 0 and Type 1-PDCCH common search space. In addition, the UE can determine the sQCL on the basis of higher layer signaling for a Type 3-PDCCH common search space and a UE-specific search space.

The UE can determine the TCI state for PDCCH (CORESET) on the basis of RRC signaling and MAC CE.

In one example, for the UE, one or a plurality (K) of TCI states can be configured for each CORESET via higher layer signaling. In addition, the UE can activate one or more TCI states for each CORESET using MAC CE.

The UE can be notified (configured) of M (M ≥ 1) TCI states for PDSCH (M pieces of QCL information for PDSCH) via higher layer signaling. Moreover, the number M of TCI states configured in the UE can be limited by at least one of the UE capability and the QCL type.

The DCI used for scheduling of PDSCH can include a given field (e.g., also referred to as a field for TCI, a TCI field, a TCI state field, etc.) indicating the TCI state (QCL information for PDSCH). The DCI can be used for PDSCH scheduling of one cell, and can be referred to as, in one example, DL DCI, DL assignment, DCI format 1_0, DCI format 1_1, or the like.

Further, in the case where the DCI includes an x-bit (e.g., x = 3) TCI field, the base station can configure previously up to 2^{x} (e.g., 8 for x = 3) types of TCI state to the UE by using higher layer signaling. The value of the TCI field in the DCI (TCI field value) can indicate one of TCI states that are configured previously via higher layer signaling.

In the case where more than eight types of TCI states are configured in the UE, less than or equal to eight types of TCI states can be activated (specified) using MAC CE. The value of the TCI field in the DCI can indicate one of the TCI states activated by MAC CE.

The UE can determine the QCL of PDSCH (or DMRS port of PDSCH) on the basis of the TCI state indicated by the TCI field value in the DCI. In one example, the UE assumes that the DMRS port (or DMRS port group) of PDSCH of the serving cell is DL-RS and QCL corresponding to the TCI state notified by the DCI, and the PDSCH receiving processes (e.g., such as decoding and demodulation) can be controlled. This makes it possible to improve the PDSCH reception accuracy.

### (FR1/FR2)

In NR, it is considered that the UE communicates (such as signal transmission/reception or measurement) using at least one frequency band (carrier frequency) of a first frequency range (FR1) and a second frequency range (FR2) .

For example, FR1 may be a frequency band of 6 GHz or less (sub-6 GHz), and FR2 may be a frequency band higher than 24 GHz (above-24 GHz).

FR1 may be defined as a frequency range in which at least one of 15, 30, and 60 kHz is used as a Sub-Carrier Spacing (SCS).

FR2 may be defined as a frequency range in which at least one of 60 and 120 kHz is used as SCS. Moreover, the frequency bands, definitions, and the like of FR1 and FR2 are not limited to these, and for example, FR1 may be a frequency band higher than FR2.

The FR2 can be used only for the time division duplex (TDD) band. The FR2 corresponds to a millimeter wave (mmW) having a wavelength of approximately 1 mm to 10 mm, and so can be referred to as mmW band. The mmW band can be referred to as extremely high frequency (EHF).

Moreover, the FR1 and FR2 are herein interchangeable respectively with a first frequency range and a second frequency range that are more general expressions that are not limited to a particular frequency band.

### (Multi-TRP)

In high frequency ranges such as mmW bands, blocking of radio waves is considered to be a serious problem, and the transmission of a signal using a plurality of transmission/reception points (TRPs) (multi-TRP) is expected as a solution to this problem.

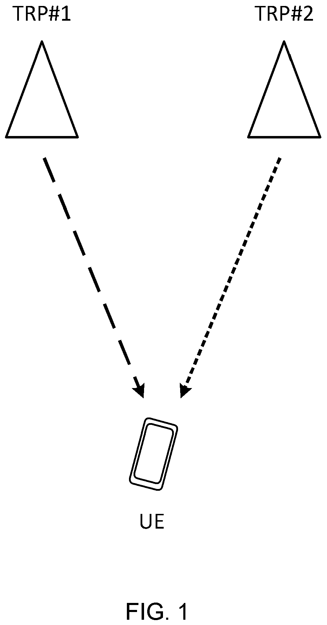

Fig. 1 is a diagram illustrating an example of communication using multi-TRP. In this example, two TRPs (TRP #1 and #2) are capable of transmitting a signal to the UE (e.g., the two TRPs provide the serving cell of the UE). Even in the case where the reception quality of the signal from one of the TRPs deteriorates at the UE, it is possible to maintain the communication if the reception quality of the signal from the other TRP is above a given level.

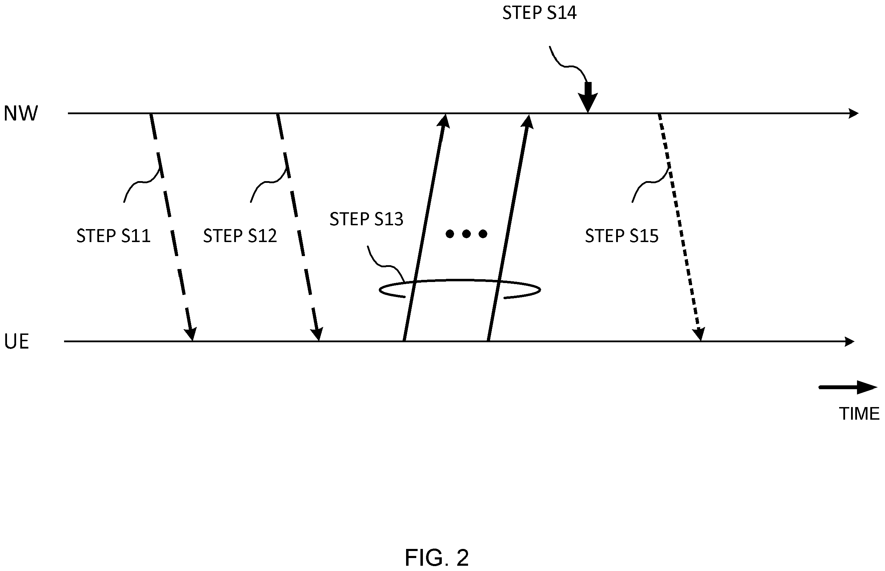

However, considering the specific case of operating the multi-TRP, there are further consideration matters. The consideration matters are now described with reference to Figs. 2 to 4.

Fig. 2 is a diagram illustrating an example of a TRP selection sequence in the case where a network recognizes the optimal TRP for the UE. At the first time point illustrated, it is assumed that the optimal TRP for the UE is TRP #1.

In step S11, a network (e.g., TRP #1) configures, for the UE, one CORESET having a TCI state indicating that RS and QCL are obtained from TRP #1.

In step S12, the network (e.g., TRP #1) transmits, to the UE, MAC CE used to activate the TCI state of CORESET configured in step S11.

In step S13, the UE reports L1-RSRP on the basis of the activated TCI state. The L1-RSRP can be reported, in one example, periodically.

In step S14, the network recognizes that it is necessary to change the TRP for the UE on the basis of the L1-RSRP (e.g., L1-RSRP, below a given threshold, fails to be received for a given period of time).

In step S15, a network (e.g., TRP #2) transmits, for the one CORESET, MAC CE used to activate the TCI state indicating that RS and QCL are obtained from TRP #2 to the UE.

In the example of Fig. 2, in Rel-15 NR, it is possible to control the multi-TRP by using the TCI state configuration function for CORESET that has been considered so far. However, the control of the TCI state of PDCCH based on RRC configuration and MAC CE activation is very slow, and it is also necessary to schedule the PDSCH for transmitting MAC CE.

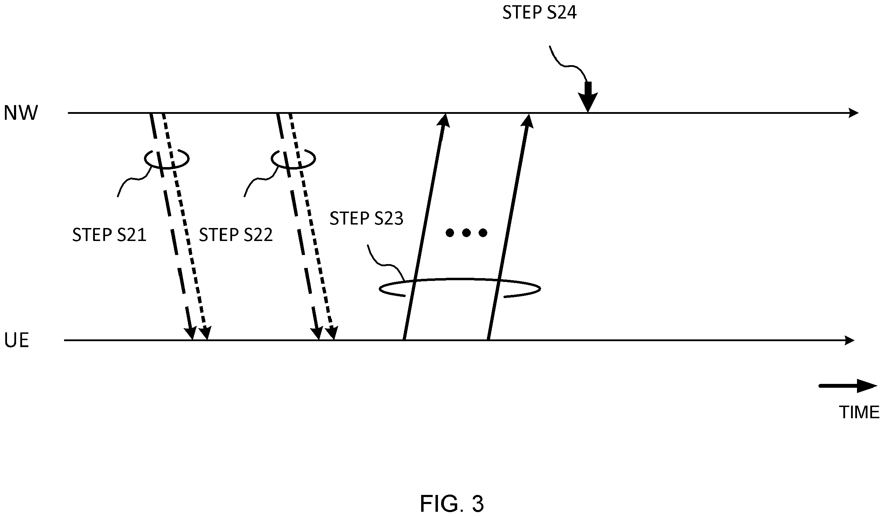

Fig. 3 is a diagram illustrating an example of a TRP selection sequence in the case where the network does not recognize the optimal TRP for the UE.

In step S21, the network (e.g., at least one of TRPs #1 and #2) configures two CORESETs for the UE. Here, one CORESET is CORESET (CORESET #1) having a TCI state indicating that RS and QCL are obtained from TRP #1, and the other CORESET is CORESET (CORESET #2)having a TCI state indicating that RS and QCL are obtained from TRP #2.

In step S22, the network transmits, to the UE, one or more MAC CEs used to activate the TCI states of two CORESETs configured in step S21.

In step S23, the UE reports L1-RSRP on the basis of the activated TCI state. The L1-RSRP can be reported, in one example, periodically.

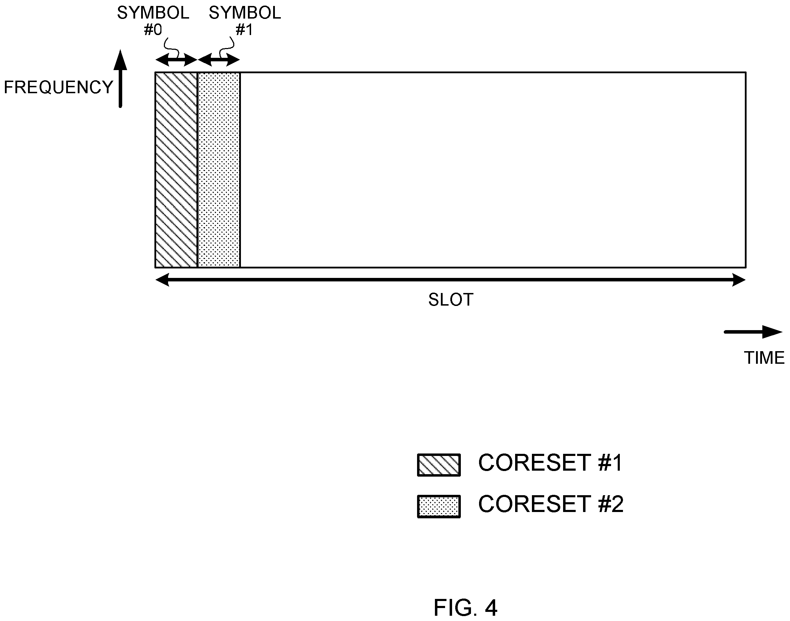

Fig. 4 is a diagram illustrating an example of CORESET configured in the example of Fig. 3. As illustrated in Fig. 4, in one example, CORESET #1 can be located at the 0th symbol (first symbol) of the slot, and CORESET #2 can be located at the 1st symbol of the slot. The UE monitors PDCCH over two CORESETs on the basis of different TCI state configurations.

In step S24, the network recognizes that it is necessary to change the TRP for the UE on the basis of the L1-RSRP.

In the example of Figs. 3 and 4, if a plurality of CORESETs corresponding to a plurality of TCI state configurations is configured in the UE, the network is not necessary to recognize the optimal TRP in advance. However, the number of CORESETs for each DL BWP is limited to a given number (e.g., three), so the maximum number of multi-TRP is also limited. In addition, the number of PDCCH candidates monitored by the UE increases by the number of configured CORESETs, and the processing load on the UE will increase.

As described above, if the PDCCH-related control method that has been considered so far are used, in the case where it is intended to support multi-TRP, problems such as delay or load on UE occurs, which causes communication throughput to be likely to decrease.

Thus, the present inventors have conceived a method of appropriately monitoring PDCCH even in the case of using multi-TRP.

Hereinafter, embodiments according to the present disclosure will be described in detail with reference to the drawings. The radio communication method according to each of the embodiments may be applied independently, or may be applied in combination with others.

### (Radio Communication Method)

### <First Embodiment>

In the first embodiment, the TCI state for PDCCH can be configured with a finer granularity than the units of CORESET.

In one example, the TCI state for PDCCH can be configured for each search space configuration (in units of search space configuration). Moreover, the terms "search space configuration", "search space set", "search space set configuration", and so on herein can be used interchangeably.

In the existing NR study, the TCI state for PDCCH (CORESET) is configured for each CORESET. In one example, the UE determines the TCI state capable of being activated in the units of corresponding CORESET on the basis of the TCI state parameter (tci-StatesPDCCH) included in the CORESET configuration information (ControlResourceSet information element of RRC) configured in RRC.

The TCI state for PDCCH can be configurable for each aggregation level (AL) for given search space configuration. In one example, the TCI state for PDCCH can be configured as different TCI states such as AL = 1, 2, 4, and 8 for a given search space configuration.

The TCI state for PDCCH can be configurable for each PDCCH candidate for a given search space configuration. In one example, the TCI state for PDCCH can be configured as different TCI states for each index of PDCCH candidates for a given search space configuration.

In the first embodiment, the search space configuration (SearchSpace information element of RRC) can include a TCI state parameter. The UE includes the TCI state parameter in the search space configuration, and the UE can assume that the TCI state for CORESET associated with the search space ID of the search space configuration is determined on the basis of the search space configuration, not the CORESET configuration information of the CORESET (i.e., tci-StatesPDCCH of ControlResourceSet can be ignored).

The search space configuration (SearchSpace information element of RRC) can include at least one of the TCI state parameter for each AL and the TCI state parameter for each PDCCH candidate. The UE can determine the TCI state for PDCCH on the basis of at least one of the units of AL and the units of PDCCH candidates, which are obtained on the basis of the parameter.

According to the first embodiment described above, it is possible to configure the TCI state for PDCCH more flexibly.

### <Second Embodiment>

In the second embodiment, one PDCCH candidate is mappable over a plurality of CORESETs. In the second embodiment, in the UE, one search space (a search space set) associated with more than one CORESET can be configured. Each PDCCH candidate or each AL can be mapped to any one or more of the configured more than one CORESET.

In one example, the network can transmit a PDCCH candidate in accordance with the following method:
(1) A part of given PDCCH candidates corresponding to CORESET #1 (the TCI state is associated with TRP #1) is transmitted using TRP #1
(2) A part of the PDCCH candidates corresponding to CORESET #2 (the TCI state is associated with TRP #2) is transmitted using TRP #2

The UE, when receiving the entire PDCCH candidates, can decode the PDCCH candidates. Here, the UE can use the part of PDCCH candidates of the above item (1) and the part of PDCCH candidates of the above item (2) for soft combining. Moreover, the term "soft combining" can be herein used interchangeably with "combining", "decoding", "error correction", and the like.

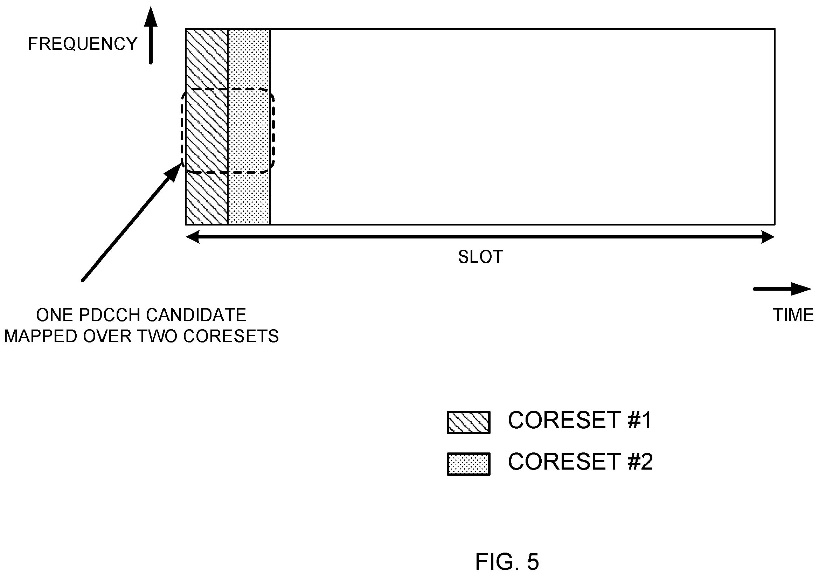

Fig. 5 is a diagram illustrating an example of mapping a resource to PDCCH candidates in the second embodiment. This example is substantially similar to Fig. 4, but the difference is that one PDCCH candidate (broken line part in the figure) is mapped (associated) over CORESETs #1 and #2.

In the case where one PDCCH candidate or AL is mapped to more than one, i.e., a plurality of CORESETs, the PDCCH candidate or AL can be separated into subsets associated with different CORESETs.

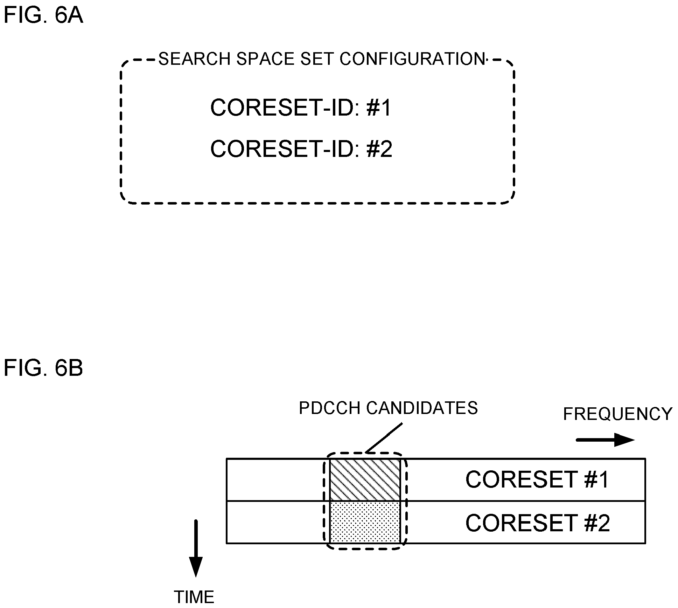

Figs. 6A and 6B are diagrams illustrating an example of search space set configuration in the second embodiment and a PDCCH candidate specified on the basis of the configuration. As illustrated in Fig. 6A, the UE can receive information regarding the search space set configuration including a plurality of CORESET-IDs (IDs #1 and #2 in this example).

The UE can perform receiving process on the assumption that a PDCCH candidate in the search space corresponding to the search space set configuration is transmitted over each CORESET of CORESET IDs #1 and #2 as illustrated in Fig. 6B.

Moreover, in the example of Fig. 6B, the PDCCH frequency resources over a plurality of CORESETs are the same over the plurality of CORESETs, but this is not limited thereto. Different radio resources (e.g., frequency and time resources) can be applied to each portion of the PDCCH on the basis of the corresponding CORESET configurations.

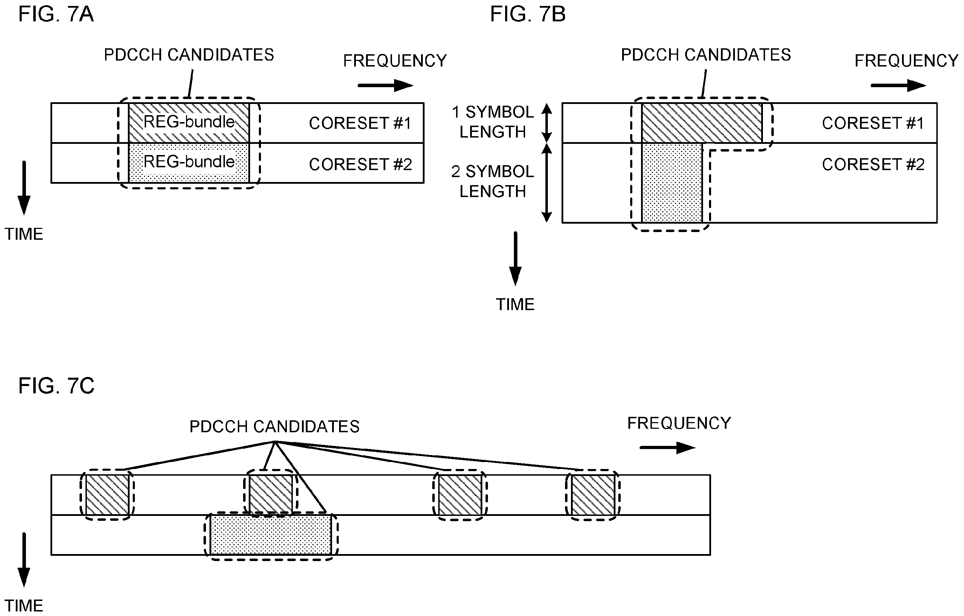

Figs. 7A to 7C are diagrams illustrating another example of mapping a resource to a PDCCH candidate in the second embodiment.

Fig. 7A illustrates an example of the case where the frequency resources of each CORESET included in one PDCCH candidate are units of each REG bundle. The UE can determine the resource amount corresponding to the PDCCH candidate in CORESET (e.g., a resource amount in units of at least one of CCE, CCE group, REG, REG bundle, PRB, etc.) on the basis of the configuration of CORESET specified by a CORESET ID. The UE, when monitoring one PDCCH candidate over a plurality of CORESETs, can determine the resource amount of each CORESET portion on the basis of each CORESET configuration.

Fig. 7B illustrates an example in which both time and frequency resource of each CORESET included in one PDCCH candidate are different. In this example, CORESET #1 is one-symbol length and CORESET #2 is two-symbol length. In addition, the frequency resource of the CORESET #1 portion of the PDCCH candidate is larger than that of the CORESET #2 portion.

Fig. 7C illustrates an example in which the mapping types (interleave or non-interleave) of each CORESET included in one PDCCH candidate are different. In this example, CORESET #1 is interleaved mapping, and CORESET #2 is non-interleaved mapping.

According to the second embodiment described above, the configuration of a PDCCH candidate over a plurality of CORESETs makes it possible to perform flexibly resource mapping of the PDCCH candidate, resulting in the preferable achievement of TRP diversity.

### <Third Embodiment>

In the third embodiment, one DCI can be able to be repeatedly transmitted over a plurality of CORESETs. Here, the repetitive transmission of the PDCCH (DCI) can be performed over a plurality of search space sets respectively associated with different CORESETs having different TCI state configurations.

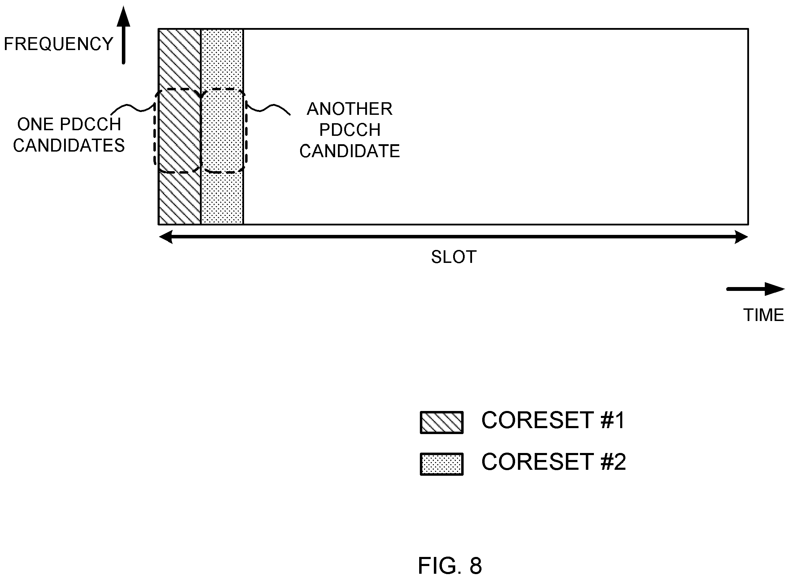

Fig. 8 is a diagram illustrating an example of mapping a resource to a PDCCH candidate in the third embodiment. In this example, one PDCCH candidate (broken line part in the figure) is mapped to each of CORESETs #1 and #2. Here, the DCIs transmitted by each PDCCH candidate are the same DCI. In other words, one DCI is repeatedly transmitted using the plurality of PDCCH candidates.

The UE may not necessarily soft-combine the repeatedly transmitted DCI, or can soft-combine the DCI. In addition, the UE may not necessarily soft-combine the data (PDSCH) scheduled by the repeatedly transmitted DCI, or can soft-combine the data. The description below is given of a case where the UE does not soft-combine the DCI (and data corresponding to the DCI) repeatedly transmitted in different search space sets (Embodiment 3.1) and a case where the UE soft-combine it (Embodiment 3.2).

### [Embodiment 3.1]

In the case where the UE does not soft-combine the DCIs (and data corresponding to DCIs) that are repeatedly transmitted in different search space sets, the UE can assume that different DCIs schedule different data.

The UE can detect more than one DL DCI per slot and can decode more than one PDSCH per slot.

Further, the UE transmits the decoded DCI or data (DL shared channel (DL-SCH)) to a higher layer (e.g., at least one of MAC layer, Packet Data Convergence Protocol (PDCP) layer, radio link control (RLC) layer, RRC layer, Internet protocol (IP) layer, and so on).

In the case where a duplicated (or same contents) packet (interchangeable with data, control information, etc.) is found in the higher layer, the UE can discard at least one of the duplicated packets. Such packet can be at least one of IP packet, RLC service data unit (SDU), RLC protocol data unit (PDU), PDCP SDU, PDCP PDU, MAC SDU, MAC PDU, and so on. Moreover, the term "discard" is used interchangeably with "ignore" or "drop".

### [Embodiment 3.2]

The UE can configure information indicating that a PDCCH candidate in one search space set is associated with a PDCCH candidate in another search space set via higher layer signaling. The information can be, in one example, information indicating that a PDCCH candidate in one search space set is softly combined with a PDCCH candidate in another search space set.

The UE can determine the number of times of blind decoding of the PDCCH candidate on the basis of the soft combining. In one example, the UE can count the number of times of blind decoding of PDCCH candidates on the basis of the number of PDCCH candidates after the soft combining (the number of DCIs having different contents among all PDCCHs (DCIs)). Even in the case where there are two PDCCH candidates before the soft combining, the UE, when applying the soft combining to these PDCCH candidates, can assume that the number of times of blind decoding for these PDCCH candidates is one time.

Further, the UE can count the number of times of blind decoding of PDCCH candidates on the basis of the number of PDCCH candidates before the soft combining (the number of all PDCCHs (DCIs) (DCIs having the same content are also counted twice)). In the case where there are two PDCCH candidates before the soft combining, the UE can assume that the number of times of blind decoding for these PDCCH candidates is two, even when applying the soft combining to these PDCCH candidates.

Moreover, such method of counting the number of times of blind decoding is applicable to other embodiments.

According to the third embodiment described above, there is a possibility that the PDSCH of each TRP can be decoded if at least one of the repeatedly transmitted DCIs is successfully decoded, resulting in the preferable achievement of TRP diversity.

### <Modification>

Moreover, the above-mentioned embodiments have been described by assuming multi-TRP, but they are applicable to the case where the UE communicates using one TRP (single TRP) .

In one example, the UE can monitor (decode) one PDCCH candidate over a plurality of CORESETs that is indicated to have DL RS and QCL of TRP #1 having the same TCI state.

Further, in the case where at least one of the above-described embodiments is employed, it can be assumed that the UE is configured to decode one PDCCH candidate by using signals transmitted from different sTRPs in a plurality of radio resources, which are configured for communication using multi-TRP.

### (Radio Communication System)

Now, a configuration of a radio communication system according to one embodiment of the present disclosure will be described below. In this radio communication system, communication is performed using one or a combination of the radio communication methods according to the embodiments of the present disclosure.

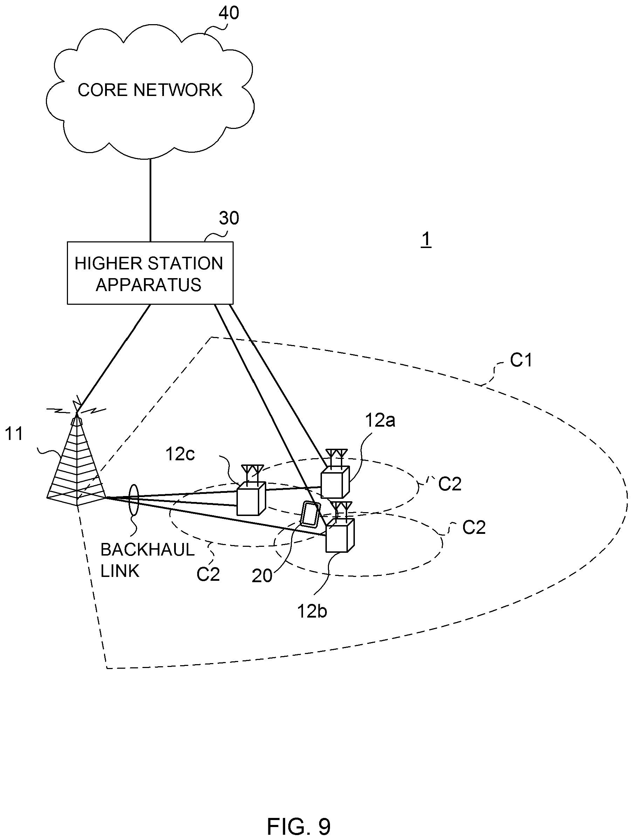

Fig. 9 is a diagram illustrating an example of a schematic configuration of a radio communication system according to an embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-Radio Access Technology (RAT)," and so on, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminal 20 is placed in the macro cell C1 and in each small cell C2. The arrangement, number and so on of cells and user terminal 20 are not limited to those illustrated in the drawings.

The user terminal 20 can connect with both the radio base station 11 and the radio base stations 12. It is assumed that the user terminal 20 uses the macro cell C1 and the small cells C2 at the same time using CA or DC. Furthermore, the user terminal 20 may apply CA or DC using a plurality of cells (CCs).

Between the user terminal 20 and the radio base station 11, communication can be carried out using a carrier of a relatively low frequency band (for example, 2 GHz) and a narrow bandwidth (referred to as an "existing carrier," a "legacy carrier" and so on). Meanwhile, between the user terminal 20 and the radio base stations 12, a carrier of a relatively high frequency band (for example, 3.5 GHz, 5 GHz, and so on) and a wide bandwidth may be used, or the same carrier as that used between the user terminal 20 and the radio base station 11 may be used. Note that the structure of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI duration, number of symbols per TTI, radio frame configuration, specific filtering processing performed by a transceiver in a frequency domain, specific windowing processing performed by a transceiver in a time domain and so on. For example, for a given physical channel, when the subcarrier spacing differs and/or the numbers of OFDM symbols are different between the constituent OFDM symbols, this case may be described that they are different in numerology.

The radio base station 11 and the radio base station 12 (or between 2 radio base stations 12) may be connected by wire (for example, means in compliance with the Common Public Radio Interface (CPRI) such as optical fiber, an X2 interface and so on) or wirelessly.

The radio base station 11 and each of the radio base stations 12 are independently connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "remote radio heads (RRHs)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (Physical Downlink Shared Channel (PDSCH)), which is used by each user terminal 20 on a shared basis, a broadcast channel (Physical Broadcast Channel (PBCH)), downlink L1/L2 control channels and so on are used as downlink channels. User data, higher layer control information and System Information Blocks (SIBs) are transmitted in the PDSCH. Further, Master Information Block (MIB) is transmitted by PBCH.

The downlink L1/L2 control channels include Physical Downlink Control Channel (PDCCH), Enhanced Physical Downlink Control Channel (EPDCCH), Physical Control Format Indicator Channel (PCFICH), Physical Hybrid-ARQ Indicator Channel (PHICH) and so on. Downlink control information (DCI), including PDSCH and/or PUSCH scheduling information, and so on, is transmitted by the PDCCH.

DCI that schedules receipt of DL data may also be referred to as "DL assignment," and DCI that schedules transmission of UL data may also be referred to as "UL grant."

The number of OFDM symbols to use for the PDCCH is transmitted by the PCFICH. Hybrid Automatic Repeat reQuest (HARQ) delivery acknowledgment information (also referred to as, for example, "retransmission control information," "HARQ-ACKs," "ACK/NACKs" and so on) in response to the PUSCH is transmitted by the PHICH. The EPDCCH is frequency-division-multiplexed with the PDSCH (downlink shared data channel) and used to transmit DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on are used as uplink channels. User data, higher layer control information, and so on are communicated by the PUSCH. Also, in the PUCCH, downlink radio quality information (Channel Quality Indicator (CQI)), delivery acknowledgment information, scheduling requests (SRs) and so on are transmitted. By means of the PRACH, random access preambles for establishing connections with cells are transmitted.

In the radio communication systems 1, cell-specific reference signals (CRSs), channel state informationreference signals (CSI-RSs), demodulation reference signals (DMRSs), positioning reference signals (PRSs) and so on are transmitted as downlink reference signals. Also, in the radio communication system 1, measurement reference signals (Sounding Reference Signals (SRSs)), demodulation reference signals (DMRSs), and so on are communicated as uplink reference signals. Note that, DMRSs may be referred to as "user terminal-specific reference signals (UE-specific Reference Signals)." Also, the reference signals to be transmitted are by no means limited to these.

### (Radio Base Station)

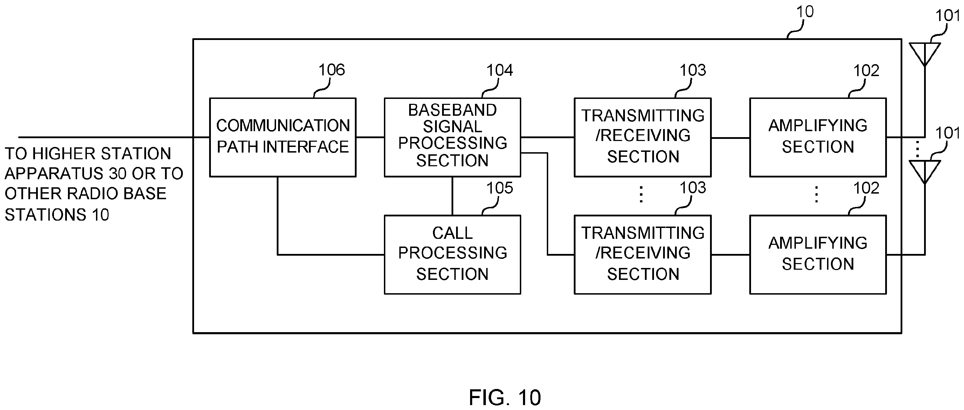

Fig. 10 is a diagram illustrating an example of an overall configuration of a radio base station according to an embodiment. A radio base station 10 has a plurality of transmitting/receiving antennas 101, amplifying sections 102, transmitting/receiving sections 103, a base band signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the transmission path interface 106.

In the baseband signal processing section 104, user data is subjected to transmission processes, including a Packet Data Convergence Protocol (PDCP) layer process, division and coupling of the user data, Radio Link Control (RLC) layer transmission processes such as RLC retransmission control, Medium Access Control (MAC) retransmission control (for example, an Hybrid Automatic Repeat reQuest (HARQ) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processing such as channel coding and inverse fast Fourier transform, and are transferred to the transmitting/receiving sections 103.

Base band signals that are pre-coded and output from the base band signal processing section 104 on a per antenna basis are converted into a radio frequency band in the transmitting/receiving sections 103, and then transmitted. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data included in the input uplink signal is subjected to fast Fourier transform (FFT) processing, inverse discrete Fourier transform (IDFT) processing, error correction decoding, receiving processing for MAC retransmission control, and receiving processing for an RLC layer and a PDCP layer, and the uplink data is transferred to the host station apparatus 30 via the transmission path interface 106. The call processing section 105 performs call processing (such as setting and releasing) for communication channels, manages states of the radio base stations 10, manages the radio resources, and so on.

The transmission path interface 106 transmits and receives signals to and from the higher station apparatus 30 via a given interface. Moreover, the transmission path interface 106 may transmit and receive (perform backhaul signaling for) signals with other radio base stations 10 via an inter-base station interface (for example, optical fiber in compliance with Common Public Radio Interface (CPRI), and the X2 interface).

Note that the transmitting/receiving section 103 may further include an analog beamforming section that performs analog beamforming. The analog beam forming unit may be composed of an analog beam forming circuit (for example, a phase shifter, a phase shift circuit) or an analog beam forming device (for example, a phase shifter), which is described based on general understanding in the technical field according to the present invention. Further, the transmitting/receiving antenna 101 may be composed of an array antenna, for example.

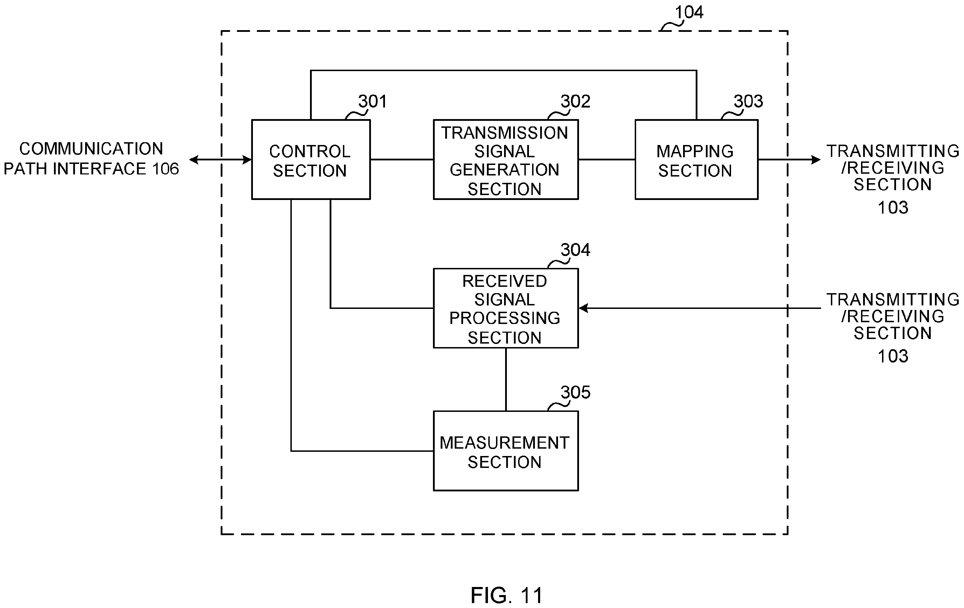

Fig. 11 is a diagram illustrating an example of a functional configuration of a radio base station according to an embodiment of the present disclosure. Note that, although this example will primarily show functional blocks that pertain to characteristic parts of the present embodiment, it may be assumed that the radio base station 10 has other functional blocks that are necessary for radio communication as well.

The base band signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the base band signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). Scheduling (e.g., resource allocation) of delivery confirmation information). The control section 301 controls the generation of downlink control signals, downlink data signals and so on, based on the results of deciding whether or not retransmission control is necessary for uplink data signals, and so on.

The control section 301 controls the scheduling of synchronization signals (for example, the Primary Synchronization Signal (PSS)/Secondary Synchronization Signal (SSS)), downlink reference signals (for example, the CRS, the CSI-RS, the DMRS, etc.) and so on.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The control section 301 may perform control to form a transmission beam and/or a reception beam using a digital BF (for example, precoding) in the base band signal processing section 104 and/or an analog BF (for example, phase rotation) in the transmitting/receiving section 103. The control section 301 may perform control to form the beams based on downlink propagation path information, uplink propagation path information, and the like. These pieces of propagation path information may be acquired from the received signal processing section 304 and/or the measurement section 305.

The transmission signal generation section 302 generates downlink signals (downlink control signals, downlink data signals, downlink reference signals and so on) based on instructions from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on instructions from the control section 301. DL assignments and UL grants are both DCI, and follow the DCI format. Also, the downlink data signals are subjected to the coding process, the modulation process and so on, by using coding rates and modulation schemes that are determined based on, for example, channel state information (CSI) reported from each user terminal 20.

The mapping section 303 maps the downlink signals generated in the transmission signal generation section 302 to given radio resources based on instructions from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, and so on) that are transmitted from the user terminal 20. The received signal processing section 304 can be constituted by a signal processor, a signal processing circuit or signal processing apparatus that can be described based on general understanding of the technical field to which the present disclosure pertains.

The received signal processing section 304 outputs information decoded by the receiving process to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform Radio Resource Management (RRM) measurements, Channel State Information (CSI) measurements and so on, based on the received signals. The measurement section 305 may measure the received power (for example, Reference Signal Received Power (RSRP)), the received quality (for example, Reference Signal Received Quality (RSRQ), Signal to Interference plus Noise Ratio (SINR), Signal to Noise Ratio (SNR), etc.), the signal strength (for example, Received Signal Strength Indicator (RSSI)), propagation path information (for example, CSI), and so on. The measurement results may be output to the control section 301.

Moreover, the transmitting/receiving section 103 can transmit downlink control information (DCI) (such as DL assignment) for scheduling a downlink shared channel (e.g., PDSCH) using PDCCH. The transmitting/receiving section 103 can transmit configuration information relating to search space configuration (e.g., SearchSpace information element), configuration information relating to CORESET (e.g., ControlResourceSet information element), and the like to the user terminal 20.

### (User terminal)

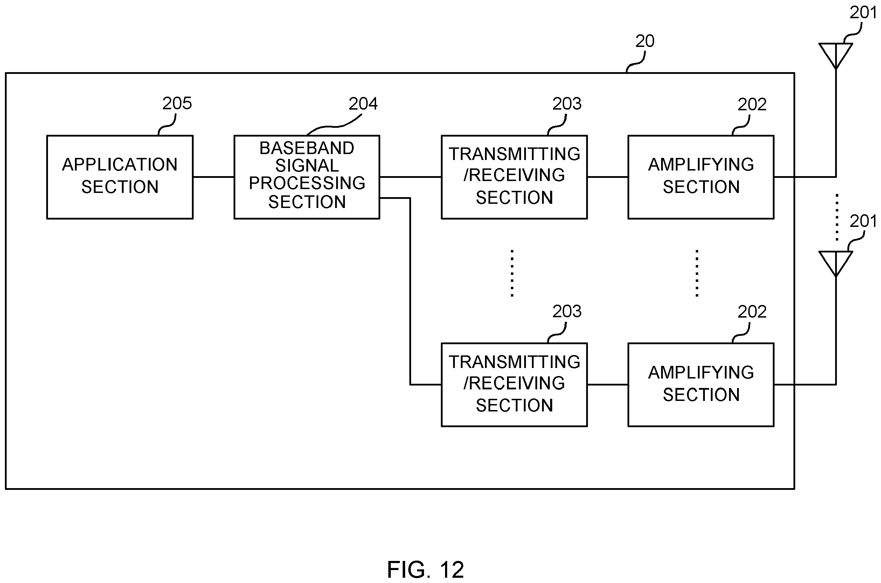

Fig. 12 is a diagram illustrating an example of an overall configuration of user terminal according to an embodiment. A user terminal 20 has a plurality of transmitting/receiving antennas 201, amplifying sections 202, transmitting/receiving sections 203, a base band signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into base band signal, and outputs the base band signal to the base band signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The base band signal processing section 204 performs receiving processes for the base band signal that is input, including an FFT process, error correction decoding, a retransmission control receiving process and so on. Downlink user data is forwarded to the application section 205. The application section 205 performs processes related to higher layers above the physical layer and the MAC layer and so on. Also, in the downlink data, the broadcast information can be also forwarded to the application section 205.

Meanwhile, uplink user data is input from the application section 205 to the base band signal processing section 204. The base band signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Base band signals that are output from the base band signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beam forming unit may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 201 may be composed of an array antenna, for example.

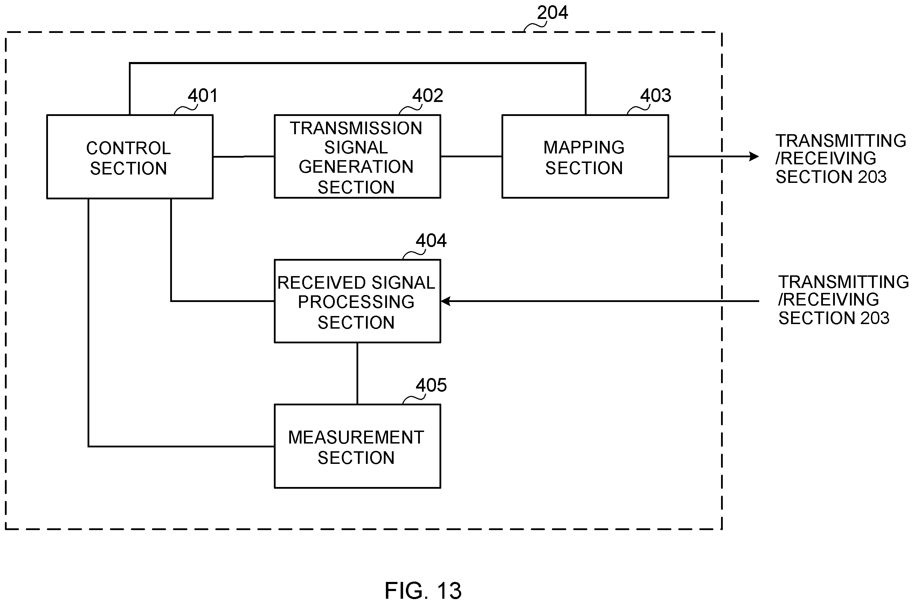

Fig. 13 is a diagram illustrating an example of a functional configuration of user terminal according to an embodiment. Note that, although this example will primarily show functional blocks that pertain to characteristic parts of the present embodiment, it may be assumed that the user terminal 20 has other functional blocks that are necessary for radio communication as well.

The base band signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the base band signal processing section 204.

The control section 401 controls the whole of the user terminal 20. The control section 401 can be constituted by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405 and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may perform control to form a transmission beam and/or a reception beam using a digital BF (for example, precoding) in the base band signal processing section 204 and/or an analog BF (for example, phase rotation) in the transmitting/receiving section 203. The control section 401 may perform control to form the beams based on downlink propagation path information, uplink propagation path information and so on. These pieces of propagation path information may be acquired from the received signal processing section 404 and/or the measurement section 405.

Further, when the control section 401 acquires various information reported from the radio base station 10 from the received signal processing section 404, the control section 401 may update the parameter used for control based on the information.

The transmission signal generation section 402 generates uplink signals (uplink control signals, uplink data signals, uplink reference signals, and so on) based on instructions from the control section 401, and outputs these signals to the mapping section 403. The transmission signal generation section 402 can be constituted by a signal generator, a signal generating circuit or signal generation apparatus that can be described based on general understanding of the technical field to which the present disclosure pertains.

For example, the transmission signal generation section 402 generates uplink control signals such as delivery acknowledgement information, channel state information (CSI) and so on, based on instructions from the control section 401. Also, the transmission signal generation section 402 generates uplink data signals based on instructions from the control section 401. For example, when a UL grant is included in a downlink control signal that is reported from the radio base station 10, the control section 401 instructions the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing unit 404 outputs, for example, broadcast information, system information, RRC signaling, DCI, and so on, to the control unit 401. Also, the received signal processing section 404 outputs the received signals and/or the signals after the receiving processes to the measurement section 405.

The measurement section 405 conducts measurements with respect to the received signals. For example, the measurement section 405 may perform same frequency measurement and/or different frequency measurement for one or both of the first carrier and the second carrier. When the serving cell is included in the first carrier, the measurement section 405 may perform the different frequency measurement in the second carrier based on a measurement instruction acquired from the received signal processing section 404. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

Moreover, the transmitting/receiving section 203 can receive downlink control information (DCI) (such as DL assignment) for scheduling a downlink shared channel (e.g., PDSCH). The transmitting/receiving section 203 can receive configuration information relating to search space configuration (e.g., SearchSpace information element), configuration information relating to CORESET (e.g., ControlResourceSet information element), and the like, from the radio base stations 10.

The control section 401 may determine (may be referred to as "specify", "judge" and so on), on the basis of the configuration information (at least one of configuration information relating to search space configuration and configuration information relating to CORESET), a transmission configuration indicator (TCI) state (TCI-state) for each physical downlink control channel (PDCCH) candidate or aggregation level included in a given control resource set (CORESET).

The control section 401 can assume that one PDCCH candidate is mapped (can be also expressed as being mapped, assigned, transmitted, etc.) over a plurality of CORESETs on the basis of the above-mentioned configuration information.

The control section 401 can assume that the same downlink control information (DCI) is transmitted in each of the plurality of CORESETs on the basis of the above-mentioned configuration information.

The control section 401 can determine that PDCCH candidates in a plurality of search spaces are softcombined on the basis of the configuration information. In one example, the control section 401 can soft-combine a PDCCH candidate of the first search space set corresponding to a part of the plurality of CORESETs (e.g., the first CORESET) with a PDCCH candidate of the second search space set corresponding to a part of the plurality of CORESETs (e.g., the second CORESET), on the basis of the above-mentioned configuration information.

The DCIs transmitted in these PDCCH candidates can be the same DCI or can be different parts of one DCI. Moreover, the first CORESET and the second CORESET can be configured as separate CORESETs (by different CORESET configurations), or can be configured as a part of the same one CORESET (by one CORESET configuration).

The control section 401 can count the number of times of blind decoding of the PDCCH candidate in consideration of the soft combining applied to a plurality of CORESETs. In one example, in the case where the soft combining is applied to two PDCCHs (DCIs) transmitted in two CORESETs, the control section 401 can count the number of times of decoding as one or two times.

The control section 401 can control receiving process of data (PDSCH) based on DCI. In addition, the control section 401 transmits the decoding result of DCI or data to the higher layer, and if a duplicate packet (DCI or data) is found in the higher layer, can discard at least one of the duplicate packets.

Moreover, the "plurality of CORESETs" can be different CORESETs corresponding to different TCI states. The TCI states can correspond to the respective different TRPs.

### (Hardware configuration)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

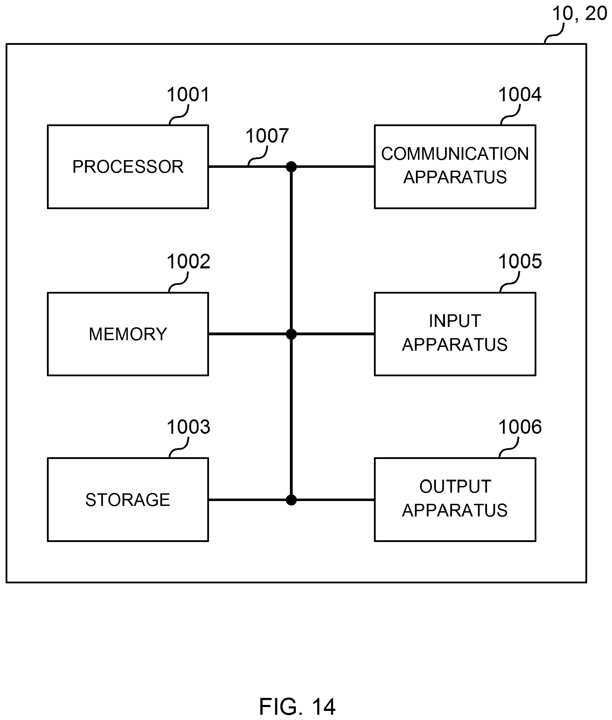

For example, the radio base station, user terminal, and so on according to embodiments of the present disclosure may function as a computer that executes the processes of the radio communication method of the present disclosure. Fig. 14 is a diagram illustrating an example of a hardware configuration of a radio base station and user terminal according to an embodiment. Physically, the above-described radio base stations 10 and user terminal 20 may be formed as a computer apparatus that includes a processor 1001, a memory 1002, a storage 1003, communication apparatus 1004, input apparatus 1005, output apparatus 1006 and a bus 1007.

Note that, in the following description, the wording "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading given software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral terminal, control apparatus, computing apparatus, a register and so on. For example, the above-described base band signal processing section 104 (204), call processing section 105 and so on may be implemented by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations of the above-described embodiments may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a Random Access Memory (RAM) and/or other appropriate storage media. The memory 1002 may be referred to as a "register," a "cache," a "main memory (main storage device)" and so on. The memory 1002 can store a program (program code), a software module, and the like, which are executable for implementing the radio communication method according to the embodiment of the present disclosure.

The storage 1003 is a computer-readable recording medium, and may be constituted by, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing intercomputer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an application-specific integrated circuit (ASIC), a programmable logic device (PLD), a field programmable gate array (FPGA) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as an "RS", and may be referred to as a "pilot", a "pilot signal", and so on, depending on which standard applies. Furthermore, a "component carrier (CC)" may be referred to as a "cell," a "frequency carrier," a "carrier frequency" and so on.

A radio frame may be comprised of one or more periods (frames) in the time domain. Each of one or more periods (frames) constituting a radio frame may be referred to as a "subframe". Furthermore, a subframe may be comprised of one or more slots in the time domain. A subframe may be a fixed time duration (for example, 1 ms) that is not dependent on the numerology.

Here, the numerology can be a communication parameter applied to at least one of transmission and reception of a given signal or channel. The numerology can indicate, in one example, at least one of subcarrier spacing (SCS), bandwidth, symbol length, cyclic prefix length, transmission time interval (TTI), the number of symbols per TTI, the radio frame configuration, particular filtering processing performed by the transceiver in frequency domains, particular windowing processing performed by a transceiver in time domains, and so on.

A slot may be comprised of one or more symbols in the time domain (orthogonal frequency division multiplexing (OFDM) symbols, single carrier frequency division multiple access (SC-FDMA) symbols, and so on). Also, a slot may be a time unit based on numerology.

A slot may include a plurality of mini slots. Each mini slot may be comprised of one or more symbols in the time domain. Also, a mini slot may be referred to as a "subslot." Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B."

A radio frame, a subframe, a slot, a mini slot and a symbol all represent the time unit in signal communication. A radio frame, a subframe, a slot, a mini slot and a symbol may be each called by other applicable names. Moreover, the time units such as frames, subframes, slots, minislots, and symbols herein are used interchangeably.

For example, one subframe may be referred to as a "transmission time interval (TTI)," or a plurality of consecutive subframes may be referred to as a "TTI," or one slot or one mini-slot may be referred to as a "TTI." That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that, when a TTI is given, a time interval (for example, the number of symbols) in which the transport blocks, the code blocks, the codewords, and the like are actually mapped may be shorter than the TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

TTI having a time duration of 1 ms may be referred to as "normal TTI" (TTI in LTE Rel. 8 to 12), "normal TTI", "long TTI", a "usual subframe", a "normal subframe", a "long subframe", a "slot", or the like. A TTI that is shorter than a normal TTI may be referred to as "shortened TTI", "short TTI", "partial TTI" (or "fractional TTI"), "shortened subframe", "short subframe", "mini slot", "subslot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB can be the same regardless of the numerology, and in one example, it can be 12. The number of subcarriers included in the RB can be determined on the basis of numerology.

Also, an RB may include one or more symbols in the time domain, and may be one slot, one mini slot, one subframe or one TTI in length. One TTI, one subframe, or the like each may be constituted as one or more resource blocks.

Note that one or more RBs may be referred to as a "physical resource block (Physical RB (PRB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

A bandwidth part (BWP) (also be referred to as a partial bandwidth) can represent a subset of consecutive common resource blocks (RBs) for a given numerology in a given carrier. Here, the common RB can be specified by the index of the RB using the common reference point of the carrier as a reference. The PRB can be defined in a given BWP and be numbered within the BWP.

The BWP can include a BWP for UL (UL BWP) and a BWP for DL (DL BWP). For the UE, one or more BWPs can be configured in one carrier.

At least one of the configured BWPs can be active, and the UE may not necessarily assume that it will transmit and receive given signals/channels outside the active BWP. Moreover, terms "cell", "carrier", and the like are herein used interchangeably with "BWP".

Note that the structures of radio frames, subframes, slots, mini slots, symbols and so on described above are merely examples. For example, configurations pertaining to the number of subframes included in a radio frame, the number of slots included in a subframe, the number of minislots included in a slot, the number of symbols and RBs included in a slot or a mini-slot, the number of subcarriers included in an RB, the number of symbols in a TTI, the symbol length, the length of cyclic prefixes (CPs) and so on can be variously changed.

Also, the information and parameters described in the present disclosure may be represented in absolute values or in relative values with respect to given values, or may be represented using other applicable information. For example, a radio resource may be indicated by a given index.

The names used for parameters and so on in the present disclosure are in no respect limiting. In addition, an equation and so on using these parameters may differ from those explicitly disclosed in the present disclosure. Since various channels (Physical Uplink Control Channel (PUCCH), Physical Downlink Control Channel (PDCCH) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, Radio Resource Control (RRC) signaling, broadcast information (the master information block (MIB), system information blocks (SIBs) and so on), Medium Access Control (MAC) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages", and can be, for example, an RRC connection setup message, RRC connection reconfiguration message, and so on. Also, MAC signaling may be reported using, for example, MAC control elements (MAC CEs).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

The terms such as "precoding", "precoder", "weight (precoding weight)", "transmission power", "phase rotation", "antenna port", "antenna port group", "layer", "number of layers", "rank", "beam", "beam width", "beam angle", "antenna", "antenna element", and "panel" can be herein used interchangeably.

The terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be herein used interchangeably. The base station may be called a term such as a "macro cell", a "small cell", a "femto cell", a "pico cell", and the like.

The base station can accommodate one or a plurality of (e.g., three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part or all of the coverage area of at least one of a base station and a base station subsystem that provides communication services within this coverage.

In the present disclosure, the terms "mobile station (MS)", "user terminal", "user equipment (UE)", "terminal", etc. may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other suitable terms.

At least one of a base station and a mobile station may be referred to as transmitting apparatus, receiving apparatus and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes a device that does not necessarily move during a communication operation.

Furthermore, the radio base stations in the present disclosure may be interpreted as user terminal. For example, each aspect/embodiment of the present disclosure may be applied to a configuration in which communication between a radio base station and a user terminal is replaced by communication among a plurality of user terminal (which may be referred to as, for example, Device-to-Device (D2D), Vehicle-to-Everything (V2X) and so on). In this case, the user terminal 20 may have the functions of the radio base stations 10 described above. In addition, the wording such as "uplink" and "downlink" may be interpreted as the wording corresponding to the terminal-to-terminal communication (for example, "side"). For example, an uplink channel and a downlink channel may be interpreted as a side channel.

Likewise, the user terminal in the present disclosure may be interpreted as radio base stations. In this case, the radio base stations 10 may have the functions of the user terminal 20 described above.

Given actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, Mobility Management Entities (MMEs), servinggateways (S-GWs) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio(NR), New radio access (NX), Future generation radio access (FX), Global System for Mobile communications (registered trademark) (GSM), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on."

Reference to elements with designations such as "first," "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as "determining" judging, calculating, computing, processing, deriving, investigating, looking up (for example, looking up for in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering" and so on.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Moreover, this term can mean that "A and B are different from C". The terms such as "separate" or "coupled" can be similarly interpreted as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various modifications, without departing from the scope of the invention defined by the recitations of the claims. Consequently, the description in the present disclosure is provided only for the purpose of explaining examples, and should by no means be construed to limit the invention according to the present disclosure in any way.

## Claims

1. A terminal (20) comprising:
a receiving section (203) configured to receive information relating to a search space set corresponding to a first control resource set, CORESET, and a search space set corresponding to a second CORESET; and
a control section (401) configured to monitor physical downlink control channel, PDCCH, candidates in the search space set corresponding to the first CORESET and in the search space set corresponding to the second CORESET,
wherein the control section (401) is configured to decode, based on a first PDCCH candidate monitored in the search space set corresponding to the first CORESET and a second PDCCH candidate monitored in the search space set corresponding to the second CORESET, same downlink control information, DCI, and
wherein the first CORESET and the second CORESET have different quasi-co-location, QCL, information.

2. The terminal (20) according to claim 1, wherein the control section (401) is configured to count, as a number of decoding, two of decoding of the first PDCCH candidate, decoding of the second PDCCH candidate, and decoding based on the first PDCCH candidate and the second PDCCH candidate, to decode the DCI.

3. A radio communication method for a terminal (20), comprising:
receiving information relating to a search space set corresponding to a first control resource set, CORESET, and a search space set corresponding to a second CORESET; and
monitoring physical downlink control channel, PDCCH, candidates in the search space set corresponding to the first CORESET and in the search space set corresponding to the second CORESET,
wherein the monitoring decodes, based on a first PDCCH candidate monitored in the search space set corresponding to the first CORESET and a second PDCCH candidate monitored in the search space set corresponding to the second CORESET, same downlink control information, DCI, and
wherein the first CORESET and the second CORESET have different quasi-co-location, QCL, information.

4. A system comprising a terminal (20) according to any one of claims 1 to 2 and a base station (10), wherein the base station (10) comprises:
a transmitting section (103) configured to transmit the information and the DCI.

## Patentansprüche

1. Endgerät (20), umfassend:
einen Empfangsabschnitt (203), der so konfiguriert ist, dass er Informationen empfängt, die sich auf ein Suchraumset entsprechend einem ersten Steuerressourcenset, CORESET, und ein Suchraumset entsprechend einem zweiten CORESET beziehen; und
einen Steuerabschnitt (401), der so konfiguriert ist, dass er Kandidaten für den physikalischen Downlink-Steuerkanal, PDCCH, in dem Suchraumset entsprechend dem ersten CORESET und in dem Suchraumset entsprechend dem zweiten CORESET überwacht,
wobei der Steuerabschnitt (401) so konfiguriert ist, dass er auf der Grundlage eines ersten PDCCH-Kandidaten, der in dem Suchraumset entsprechend dem ersten CORESET überwacht wird, und eines zweiten PDCCH-Kandidaten, der in dem Suchraumset entsprechend dem zweiten CORESET überwacht wird, dieselben Downlink-Steuerinformationen, DCI, dekodiert, und
wobei das erste CORESET und das zweite CORESET unterschiedliche Quasi-Co-Location-Informationen, QCL, aufweisen.

2. Endgerät (20) nach Anspruch 1, wobei der Steuerabschnitt (401) so konfiguriert ist, dass er als eine Anzahl der Dekodierung zwei von einer Dekodierung des ersten PDCCH-Kandidaten, einer Dekodierung des zweiten PDCCH-Kandidaten und einer Dekodierung auf der Grundlage des ersten PDCCH-Kandidaten und des zweiten PDCCH-Kandidaten zählt, um die DCI zu dekodieren.

3. Funkkommunikationsverfahren für ein Endgerät (20), umfassend:
Empfangen von Informationen, die sich auf ein Suchraumset entsprechend einem ersten Steuerressourcenset, CORESET, und ein Suchraumset entsprechend einem zweiten CORESET beziehen; und
Überwachen von Kandidaten für den physikalischen Downlink-Steuerkanal, PDCCH, in dem Suchraumset entsprechend dem ersten CORESET und in dem Suchraumset entsprechend dem zweiten CORESET,
wobei die Überwachung auf der Grundlage eines ersten PDCCH-Kandidaten, der in dem Suchraumset entsprechend dem ersten CORESET überwacht wird, und eines zweiten PDCCH-Kandidaten, der in dem Suchraumset entsprechend dem zweiten CORESET überwacht wird, dieselben Downlink-Steuerinformationen, DCI, dekodiert, und
wobei das erste CORESET und das zweite CORESET unterschiedliche Quasi-Co-Location-Informationen, QCL, aufweisen.

4. System, das ein Endgerät (20) nach einem der Ansprüche 1 bis 2 und eine Basisstation (10) umfasst, wobei die Basisstation (10) umfasst:
einen Übertragungsabschnitt (103), der so konfiguriert ist, dass er die Informationen und die DCI überträgt.

## Revendications

1. Terminal (20) comprenant :
une section de réception (203) configurée pour recevoir des informations se rapportant à un ensemble d'espace de recherche correspondant à un premier ensemble de ressources de commande, CORESET, et un ensemble d'espace de recherche correspondant à un second CORESET ; et
une section de commande (401) configurée pour surveiller des candidats de canal de commande de liaison descendante physique, PDCCH, dans l'ensemble d'espace de recherche correspondant au premier CORESET et dans l'ensemble d'espace de recherche correspondant au second CORESET,
dans lequel la section de commande (401) est configurée pour décoder, sur la base d'un premier candidat PDCCH surveillé dans l'ensemble d'espace de recherche correspondant au premier CORESET et d'un second candidat PDCCH surveillé dans l'ensemble d'espace de recherche correspondant au second CORESET, des mêmes informations de commande de liaison descendante, DCI, et
dans lequel le premier CORESET et le second CORESET ont différentes informations de quasi co-localisation, QCL.

2. Terminal (20) selon la revendication 1, dans lequel la section de commande (401) est configurée pour compter, en tant qu'un nombre de décodage, deux parmi un décodage du premier candidat PDCCH, un décodage du second candidat PDCCH, et un décodage sur la base du premier candidat PDCCH et du second candidat PDCCH, pour décoder les DCI.

3. Procédé de communication radio pour un terminal (20), comprenant :
la réception d'information se rapportant à un ensemble d'espace de recherche correspondant à un premier ensemble de ressources de commande, CORESET, et un ensemble d'espace de recherche correspondant à un second CORESET ; et
la surveillance de candidats de canal de commande de liaison descendante physique, PDCCH, dans l'ensemble d'espace de recherche correspondant au premier CORESET et dans l'ensemble d'espace de recherche correspondant au second CORESET,
dans lequel la surveillance décode, sur la base d'un premier candidat PDCCH surveillé dans l'ensemble d'espace de recherche correspondant au premier CORESET et d'un second candidat PDCCH surveillé dans l'ensemble d'espace de recherche correspondant au second CORESET, les mêmes informations de commande de liaison descendante, DCI, et
dans lequel le premier CORESET et le second CORESET ont différentes informations de quasi co-localisation, QCL.

4. Système comprenant un terminal (20) selon l'une quelconque des revendications 1 et 2 et une station de base (10), dans lequel la station de base (10) comprend :
une section de transmission (103) configurée pour transmettre les informations et les DCI.
